(19) Europäisches Patentamt
European Patent Office
Office européen des brevets

(11) **EP 4 597 859 A1**

(12) **EUROPEAN PATENT APPLICATION**
published in accordance with Art. 153(4) EPC

(43) Date of publication:
**06.08.2025 Bulletin 2025/32**

(21) Application number: **23893644.7**

(22) Date of filing: **09.11.2023**

(51) International Patent Classification (IPC):
***H04B 7/0456*** (2017.01)

(52) Cooperative Patent Classification (CPC):
**H04B 7/0456; H04B 15/00**

(86) International application number:
**PCT/CN2023/130797**

(87) International publication number:
**WO 2024/109553 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.11.2022 CN 202211491458**

(71) Applicant: **ZTE Corporation
Shenzhen, Guangdong 518057 (CN)**

(72) Inventors:
• **YUAN, Zhifeng
Shenzhen, Guangdong 518057 (CN)**

• **MA, Yihua
Shenzhen, Guangdong 518057 (CN)**
• **LU, Guangyan
Shenzhen, Guangdong 518057 (CN)**
• **CHEN, Yijian
Shenzhen, Guangdong 518057 (CN)**
• **YU, Hongkang
Shenzhen, Guangdong 518057 (CN)**

(74) Representative: **Ziebig Hengelhaupt Intellectual
Property Attorneys
Patentanwaltskanzlei PartGmbB
Leipziger Straße 49
10117 Berlin (DE)**

(54) **PRECODING METHOD, COMMUNICATION APPARATUS, AND STORAGE MEDIUM**

(57) Embodiments of the present application provide a precoding method, a communication apparatus, and a storage medium. The method comprises: an access node acquires a preprocessed modulation symbol from a control node, wherein the preprocessed modulation symbol is obtained by preprocessing a modulation symbol by means of a preprocessing matrix; the access node precodes the preprocessed modulation symbol to obtain a precoded modulation symbol; and the access node sends the precoded modulation symbol.

FIG. 3

## Description

The present disclosure claims priority to Chinese Patent Application No. 202211491458.2, filed on November 25, 2022, which is incorporated in the present disclosure by reference in its entirety.

TECHNICAL FIELD

The present disclosure relates to the field of communication technologies, and in particular, to a precoding method, a communication apparatus and a storage medium.

BACKGROUND

Cell-free massive multiple input multiple output (MIMO) networks may deploy many access points (AP) simply and efficiently. In a Cell-free MIMO system, access points are close to users, and all access points (APs) collaboratively serve the users. All the access points are connected to one control node, such as a central processing unit (CPU) or a central control node, without cell boundaries, which has high scalability.

However, in a downlink transmission process of the Cell-free MIMO system, a precoding method utilized by each AP does not consider the mutual interference between a plurality of users, resulting in the downlink transmission performance being affected.

SUMMARY

The embodiments of the present disclosure provide a precoding method, a communication apparatus, and a storage medium, for suppressing the mutual interference between a plurality of users in a downlink transmission process, to improve the transmission performance of the downlink transmission.

To achieve the above purposes, the present disclosure utilizes the following technical solution.

In a first aspect, the embodiments of the present disclosure provide a precoding method, and the method includes:

acquiring, by an access node, a preprocessed modulation symbol from a control node, where the preprocessed modulation symbol is obtained by preprocessing a modulation symbol by a preprocessing matrix;
precoding, by the access node, the preprocessed modulation symbol, to obtain a precoded modulation symbol; and
sending, by the access node, the precoded modulation symbol.

In a second aspect, the embodiments of the present disclosure further provide a precoding method, and the method includes:

preprocessing, by a control node, a modulation symbol by using a preprocessing matrix, to obtain a preprocessed modulation symbol; and
sending, by the control node, the preprocessed modulation symbol to an access node.

In a third aspect, the embodiments of the present disclosure further provide a precoding method, and the method includes:

acquiring, by an access node, a modulation symbol and a preprocessing matrix from a control node;
preprocessing, by the access node, the modulation symbol based on the preprocessing matrix, to obtain a preprocessed modulation symbol;
precoding, by the access node, the preprocessed modulation symbol, to obtain a precoded modulation symbol; and
sending, by the access node, the precoded modulation symbol.

In a fourth aspect, the embodiments of the present disclosure further provide a precoding method, and the method includes:

acquiring, by a control node, a preprocessing matrix and a modulation symbol; and
sending, by the control node, the preprocessing matrix and the modulation symbol to an access node.

In a fifth aspect, the embodiments of the present disclosure further provide a precoding method, and the method includes:

acquiring, by an access node, a modulation symbol and a preprocessing matrix from a control node;

acquiring, by the access node, a precoding vector according to the preprocessing matrix and a channel vector corresponding to the access node;

precoding, by the access node, the modulation symbol according to the precoding vector, to obtain a precoded modulation symbol; and

sending, by the access node, the precoded modulation symbol.

In a sixth aspect, the embodiments of the present disclosure further provide an access node, and the access node includes:

a transceiver module, configured to acquire a preprocessed modulation symbol from a control node, where the preprocessed modulation symbol is obtained by preprocessing a modulation symbol by a preprocessing matrix; and

a processing module, configured to precode the preprocessed modulation symbol, to obtain a precoded modulation symbol; and

the transceiver module, further configured to send the precoded modulation symbol.

In a seventh aspect, the embodiments of the present disclosure further provide a control node, and the control node includes:

a processing module, configured to preprocess a modulation symbol by using a preprocessing matrix, to obtain a preprocessed modulation symbol; and

a transceiver module, configured to send the preprocessed modulation symbol to an access node.

In an eighth aspect, the embodiments of the present disclosure further provide an access node, and the access node includes:

a transceiver module, configured to acquire a modulation symbol and a preprocessing matrix from a control node; and

a processing module, configured to preprocess the modulation symbol based on the preprocessing matrix, to obtain a preprocessed modulation symbol; and

the processing module, further configured to precode the preprocessed modulation symbol, to obtain a precoded modulation symbol. The transceiver module is further configured to send the precoded modulation symbol.

In a ninth aspect, the embodiments of the present disclosure further provide a control node, and the control node includes: a transceiver module, configured to acquire a preprocessing matrix and a modulation symbol. The transceiver module is configured to send the preprocessing matrix and the modulation symbol to an access node.

In a tenth aspect, the embodiments of the present disclosure further provide an access node, and the access node includes:

a transceiver module, configured to acquire a modulation symbol and a preprocessing matrix from a control node; and

a processing module, configured to determine a precoding vector according to the preprocessing matrix and a channel vector corresponding to the access node; and precode the modulation symbol according to the precoding vector, to obtain a precoded modulation symbol; and

the transceiver module, further configured to send the precoded modulation symbol.

In an eleventh aspect, the embodiments of the present disclosure further provide a communication apparatus, and the communication apparatus includes: a processor and a memory for storing instructions executable by the processor; where the processor is configured to execute the instructions to cause an electronic device to perform the precoding method as provided in any one of the first aspect to the fourth aspect above.

In a twelfth aspect, the embodiments of the present disclosure further provide a computer-readable storage medium, where the computer-readable storage medium has stored computer instructions, and the computer instructions, when executed on an electronic device, cause the electronic device to perform the precoding method as provided in any one of the first aspect to the fourth aspect above.

In a thirteenth aspect, the embodiments of the present disclosure further provide a computer program product including computer program instructions, where the computer program instructions, upon being executed by a processor, implement the precoding method as provided in any one of the first aspect to the fourth aspect above.

In the embodiments of the present disclosure, the modulation symbol is preprocessed based on the preprocessing matrix, and then the preprocessed modulation symbol is precoded, so that the precoded modulation symbol may suppress interference between multiple users, thereby improving multi-user downlink transmission performance of the system.

BRIEF DESCRIPTION OF THE DRAWINGS

FIG. 1 is a schematic diagram of a Cell-free MIMO system provided by the embodiments of the present disclosure.

FIG. 2 is a schematic diagram of transmission performance of a system provided by the embodiments of the present disclosure.

FIG. 3 is a flow schematic diagram of a precoding method provided by the embodiments of the present disclosure.

FIG. 4 is a flow schematic diagram of another precoding method provided by the embodiments of the present disclosure.

FIG. 5 is a flow schematic diagram of another precoding method provided by the embodiments of the present disclosure.

FIG. 6 is a schematic diagram of the composition of an access node provided by the embodiments of the present disclosure.

FIG. 7 is a schematic diagram of the composition of a control node provided by the embodiments of the present disclosure.

FIG. 8 is a structural schematic diagram of a communication apparatus provided by the embodiments of the present disclosure.

DETAILED DESCRIPTION

The technical solutions in the embodiments of the present disclosure will be described below clearly and completely with reference to the drawings in the embodiments of the present disclosure. Obviously, the described embodiments are merely some but not all of the embodiments of the present disclosure. All other embodiments obtained based on the embodiments of the present disclosure by those ordinary skilled in the art without paying any creative effort shall be included in the protection scope of the present disclosure.

It should be noted that all directional indications (such as upper, lower, left, right, front, and back) in the embodiments of the present disclosure are merely used to explain relative positional relationships, motion conditions, or the like between components under a certain specific posture (as shown in the drawings). If the specific posture changes, the directional indications will also change accordingly.

The terms such as "first" and "second" or the like are only used for descriptive purposes, and cannot be construed as indicating or implying the relative importance or implicitly indicating the number of indicated technical features. Thus, features defined with "first" and "second" or the like may explicitly or implicitly include one or more of the features. In the description of the present disclosure, "a/the plurality of/multiple" means two or more, unless otherwise specified.

In the description of the present disclosure, it should be noted that, unless otherwise clearly specified and limited, the phrases "connected with" and "connected to" and variants thereof should be understood in a broad sense. For example, it may be a fixed connection, a detachable connection, or an integral connection. Specific meanings of the above terms in the present disclosure may be understood by those ordinary skilled in the art according to specific situations. In addition, when describing pipelines, the phrases "connected with" and "connected to" and variants thereof used in the present disclosure have the meaning of conducting. The specific meaning needs to be understood in conjunction with the context.

In the embodiments of the present disclosure, the words, such as "exemplary/exemplarily" or "for example", are used as an example, an illustration, or an explanation. Any embodiment or design solution described with "exemplary/exemplarily" or "for example" in the embodiments of the present disclosure should not be construed as preferred or advantageous over other embodiments or design solutions. Rather, the use of words such as "exemplary/exemplarily" or "for example" is intended to present relevant concepts in a specific manner.

In the description of the present disclosure, unless otherwise specified, the symbol "/" means "or", and for example, "A/B" may mean A or B. Herein, "and/or" merely describes an associated relationship between associated objects, which represents that there may be three kinds of relationships, and for example, A and/or B may represent three cases of: only A, both A and B, or only B.

In order to understand the embodiments of the present disclosure more clearly, some terms or technologies involved in the embodiments of the present disclosure are described below.

A system architecture applied by the embodiments of the present disclosure, i.e., a Cell-free MIMO system, will be described below.

The Cell-free MIMO system adopts a user-centric transmission design, and all APs collaboratively serve all users. In addition, the APs in the network are usually deployed in a distributed manner and connected to a central processing unit (CPU) via a certain connecting method (topology method). The central processing unit CPU in the present disclosure may be also known as a central control node, or simply known as a control node, that is, the central processing unit CPU is equivalent to the central control node or the control node. Each user in the Cell-free MIMO system may receive signals from different access points, and such distributed system may provide good service quality for all users within a coverage area. Therefore, the Cell-free MIMO system has simpler power control, higher optical spectral efficiency, and higher energy efficiency than conventional MIMO networks. The Cell-free system that is deployed with a large number of distributed APs is essentially an extremely large aperture antenna array (Extremely Large Aperture Array, ELAA).

Here, the transmission and reception of wireless signals of the Cell-free MIMO system are both completed by the access nodes APs.

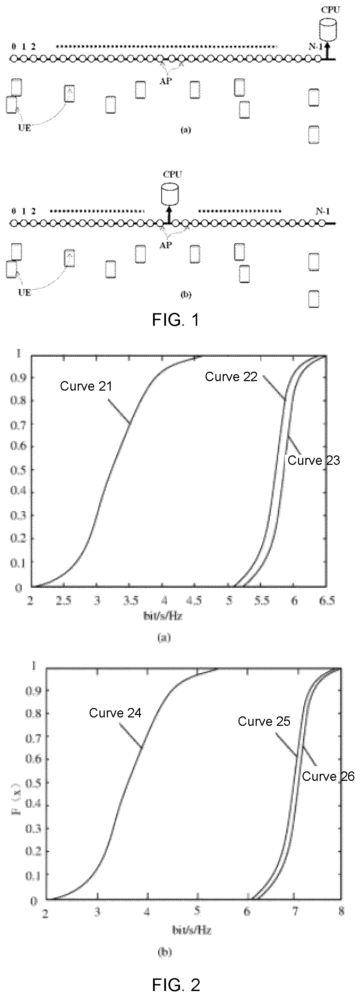

Exemplarily, as shown in (a) of FIG. 1, the Cell-free MIMO system includes NAPs (including access point 0, access point 1, ..., access point N-1), and these NAPs are connected to a CPU via a chain-shaped or stripe-shaped connection. In addition, the coverage range of the Cell-free MIMO system includes a plurality of user equipment (UEs). Or, as shown in (b) of FIG. 1, some APs of the NAPs are connected to a CPU via a chain-shaped or stripe-shaped connection, and other APs of the NAPs are connected to the same CPU via another chain-shaped or stripe-shaped connection. Optionally, data transmissions between the plurality of APs and the CPU are performed via radio stripe front-haul. On the other hand, some ultra-large aperture antenna arrays are also based on a CPU and a large number of APs, and transmitted and received data is transmitted between the APs and the CPU via a stripe-shaped front-haul architecture. For example, an extremely large aperture antenna array (ELAA) in which an entire outer wall of a building is covered with APs densely and these APs are connected to a CPU via stripe-shaped front-haul, is very similar to the Cell-free system based on stripe-shaped front-haul. Therefore, the method provided in the embodiments of the present disclosure is also applicable to the extremely large aperture antenna array (ELAA) based on the stripe-shaped front-haul architecture.

1. An uplink transmission process of the Cell-free MIMO system.

Taking the connection between the APs and the CPU shown in (a) of FIG. 1 as an example, in the uplink transmission process of the Cell-free MIMO system, if there are K UEs transmitting data (i.e., uplink transmission data) to APs, and assuming that L symbols transmitted by each UE of the K UEs experience a same radio channel (channels experienced by symbols of different users are independent), L data symbols received by any AP of MAPs may be expressed as the following formula (1):

$$y_m = \sum_{k=1}^{K} h_{mk} S_k \; + \; \pmb{n}_m \qquad \text{Formula (1).}$$

Here, $\pmb{y}_m$ is a vector composed of the L data symbols received by $AP_m$, i.e., $\pmb{y}_m = [y_{m,1}, y_{m,2}, \ldots \ldots, y_{m,L}]$ is a row vector. $AP_m$ is an m-th AP of the M APs. $\pmb{s}_k$ is a vector composed of L data symbols transmitted by user equipment $UE_k$, i.e., $\pmb{s}_k = [s_{k,1}, s_{k,2}, \ldots \ldots, s_{k,L}]$ is also a row vector. $h_{mk}$ is a channel of a radio channel on which $UE_k$ transmits data to $AP_m$, and is a scalar. $\pmb{n}_m$ is a noise value on $AP_m$, which may be an additive white Gaussian noise (AWGN) noise value, and is a row vector containing L elements.

Furthermore, data symbols received by the M APs may be expressed as the following formula (2):

$$\pmb{Y} = \sum_{k=1}^{K} \pmb{h}_k \, \pmb{s}_k + \pmb{N} = \pmb{HS} + \pmb{N} \qquad \text{Formula (2).}$$

Here, $\pmb{Y}$ is $\begin{bmatrix} \pmb{y}_1 \\ \pmb{y}_2 \\ \ldots \ldots \\ \pmb{y}_m \end{bmatrix}$, which is an M×L matrix, and elements in the m-th row of $\pmb{Y}$ are the above-mentioned $y_m$. $\pmb{S}$ is $\begin{bmatrix} \pmb{s}_1 \\ \pmb{s}_2 \\ \ldots \ldots \\ \pmb{s}_k \end{bmatrix}$, which is a K×L matrix, where a k-th row of $\pmb{S}$ is $\pmb{s}_k$. $\pmb{h}_k$ is a spatial channel vector between the user equipment k and the M APs respectively, i.e., $[\pmb{h}_{1k}, \pmb{h}_{2k}, \ldots \ldots, \pmb{h}_{Mk}]^T$, which is a column vector with a length M, i.e., the column vector has M rows; and $\pmb{H} = [\pmb{h}_1, \pmb{h}_2, \ldots \pmb{h}_K]$ is an M×K matrix. N refers to AWGN noise, which is an M×L matrix.

In some embodiments, in the uplink transmission process of the Cell-free MIMO system, a multi-user detection is first performed based on MRC. Here, the process of performing multi-user detection based on MRC includes the following steps.

In S11, $AP_m$ estimates and obtains the channel $h_{mk}$ of the radio channel from $UE_k$ to $AP_m$ by a reference signal of $UE_k$.

In S12, the received data symbol $\boldsymbol{y}_m$ is weighted based on a conjugate of $h_{mk}$, i.e., $h_{mk}^{H}$, and a data symbol $h_{mk}^{H}y_m$ related to the user k is obtained.

In S13, $h_{mk}^{H}\boldsymbol{y_m}$ and a data symbol $\sum_{j=1}^{m-1} h_{jk}^{H}\boldsymbol{y_j}$ related to the user k transmitted by a previous AP (i.e., $AP_{m-1}$ ) are accumulated together, i.e., by $h_{mk}^{H}\boldsymbol{y_m}+\sum_{j=1}^{m-1} h_{jk}^{H}\boldsymbol{y_j}$, $\sum_{j=1}^{m} h_{jk}^{H}\boldsymbol{y_j}$ is obtained.

In S14, an accumulated signal in step S13 is transmitted to a next AP (i.e., $AP_{m+1}$).

Analogically, a data symbol related to the user k transmitted by a last M-th AP to the CPU is $\sum_{j=1}^{M} h_{jk}^{H}\boldsymbol{y_j}$.

In the MRC-based receiving method above, each AP only needs to transmit K data symbol streams to a next AP without transmitting other information. For example, $AP_m$ only needs to transmit K data symbol streams with the length L ( $\sum_{j=1}^{m} h_{jk}^{H}\boldsymbol{y_j}$ , k=1...K) to $AP_{m+1}$.

In addition, the signal $\sum_{j=1}^{M} h_{jk}^{H}\boldsymbol{y_j}$ related to the user k received by the CPU may also be expressed as $h_k^{H}Y$. Here, $h_k^{H}$ is a conjugate transpose of the channel vector $\boldsymbol{h_k}$.

Furthermore, MRC data symbols of the K users may be combined and written as $S_{MRC} = H^H Y$. That is, the MRC-combined data symbols of the K users received by the CPU and transmitted by the AP is the following formula (3):

$$S_{MRC} = H^{H}Y = H^{H}(HS + N) = H^{H}HS + H^{H}N \qquad \text{Formula (3).}$$

Here, $S_{MRC} = H^H Y$ is a K*L matrix, each row of which is an MRC-combined symbol stream of a user.

It should be noted that in the uplink transmission process of the Cell-free MIMO system, the multi-user detection for suppressing inter-user interference may also be performed.

An uplink multi-user detection for suppressing inter-user interference will be described below.

Based on the above related description for the uplink transmission process, it can be seen that signals received by the M antennas/APs in the Cell-free MIMO system may be expressed as the following formula (4):

$$Y = \sum_{k=1}^{K} h_k\, s_k + N = HS + N \qquad \text{Formula (4).}$$

Here, $H$ is an M×K matrix. $N$ is an AWGN noise value with a variance $\sigma^2$, and it is an M×L matrix.

Furthermore, minimum mean square error (MMSE) detection may be performed on $S$. It should be noted that the MMSE detection may effectively suppress inter-user interference and has higher performance.

In a case where a base station has obtained the channel matrix $H$, a process for estimating the MMSE of $S$ is the following formula (5):

$$\tilde{S} = \left(H^{H}H + \sigma^2 I_{K\times K}\right)^{-1}H^{H}Y = \left(H^{H}H + \sigma^2 I_{K\times K}\right)^{-1}H^{H}\ (HS + N)\ = \left(H^{H}H + \sigma^2 I_{K\times K}\right)^{-1}H^{H}HS + N' \quad \text{Formula (5).}$$

2. A downlink transmission process of the Cell-free system.

Taking a Cell-free MIMO system based on a radio stripe as an example, and in a Cell-free MIMO system based on a radio stripe architecture, the downlink transmission usually uses conjugate precoding, i.e., MRC precoding. First, the CPU may transmit modulation symbols $S_{DL}$ of the K users to each AP via radio stripe front haul, and then each AP performs conjugate precoding on the modulation symbols based on radio channel information of each user.

Based on the channel matrix $H$ of the uplink transmission, assuming that the channel of the downlink transmission is reciprocal with the channel of the uplink transmission, signals received by the K users during the downlink transmission may be expressed as the following formula (6):

$$R = H^t X + N \qquad \text{Formula (6).}$$

Where the channel matrix $H^t$ of the downlink channel is a K×M matrix, i.e., a transposed matrix of the channel matrix of the uplink channel (transposed only, not conjugated). X is an M×L matrix, and elements of an m-th row of X are L symbols transmitted by the m-th AP. R is a received symbol, which is a K×L matrix, and elements of a k-th row of R are L symbols received by the k-th UE. N is an AWGN noise value with a variance $\sigma^2$, and it is a K×L matrix.

It should be noted that since the AP usually only performs conjugate precoding in the downlink transmission process of the Radio Stripe Cell-free MIMO system, a signal transmitted by the AP may be expressed as the following formula (7):

$$X = (H^t)^H S_{DL} \qquad \text{Formula (7).}$$

Furthermore, a signal received by the UE via the downlink channel $H^t$ is the following formula (8):

$$R = H^t X + N \qquad \text{Formula (8).}$$

Based on an equation of the matrix property: $H^t (H^t)^H = H^t (H^H)^t = (H^H H)^t$, the signal received by the UE may be further determined as the following formula (9):

$$R = H^t X + N = H^t (H^t)^H S_{DL} + N = (H^H H)^t S_{DL} + N \qquad \text{Formula (9).}$$

It should be noted that in a case where different user channels are nearly orthogonal, $H^H H$ will approach a unit array, and thus, inter-user interference (IUI) between multiple users will basically not be generated in the transmission process. However, in the process of the actual deployment, channels of different users are usually difficult to be completely orthogonal, i.e., $H^H H$ is usually not a unit array, which will result in IUI.

Exemplarily, a received symbol of user 1 may be: $r_1 = s_1 + 0.2 \times s_2 + 0.15 \times s_3 \dots \dots + 0.1 \times s_k + n_1$.

It can be seen that, there may also be interference from other user symbols, i.e., $s_2, s_3, s_k$, etc., in the received symbol $r_1$ of the user 1, in addition to a modulation symbol $s_1$ corresponding to the user 1, which will cause a decrease in transmission performance of the user 1.

In view of this, the embodiments of the present disclosure provide a precoding method, which may determine a preprocessing matrix, so as to preprocess the modulation symbol before the AP performs conjugate precoding, so that the inter-user interference is reduced in the downlink transmission process. The downlink data transmission process from a network side to a user side will be described below based on the precoding method provided in the embodiments of the present disclosure.

In S21, a modulation symbol $S_{DL}$ is preprocessed and a preprocessed modulation symbol $\hat{S}$ is obtained.

In some embodiments, $\hat{S}$ satisfies the following formula (10):

$$\hat{S} = (H^t(H^t)^H + \sigma^2 I)^{-1} S_{DL} = ((H^H H)^t + \sigma^2 I)^{-1} S_{DL} \qquad \text{Formula (10).}$$

In S22, conjugate precoding is performed on the preprocessed modulation symbol $\hat{S}$, to determine a signal transmitted by the AP. The signal transmitted by the AP may be expressed as the following formula (11):

$$X = (H^t)^H \hat{S} \qquad \text{Formula (11).}$$

In S23, the signal X transmitted by the AP passes through a downlink channel, and a signal R received by a UE may be expressed as:

$$R = H^t X + N = H^t \ (H^t)^{\ H}\widehat{S} + N = (H^H H)^t ((H^H H)^t + \sigma^2 I)^{-1} S_{DL} + N$$

$$=$$

$$(H^H H)^t ((H^H H + \sigma^2 I)^t)^{-1} S_{DL} + N$$

$$=$$

$$(H^H H)^t ((H^H H + \sigma^2 I)^{-1})^t S_{DL} + N \qquad \text{Formula (12).}$$

$$=((H^H H + \sigma^2 I)^{-1} H^H H)^t S_{DL} + N$$

It should be noted that comparing the signal received by the UE obtained in the above step S23, i.e., comparing formula (12) and formula (5) in the MMSE estimation process in the uplink transmission process of the system, it can be seen that a difference between $((H^H H + \sigma^2 I)^{-1} H^H H)^l$ in formula (12) and $(H^H H + \sigma^2 I_{K \times K})^{-1} H^H H$ is a transpose, and noise values are $N$ and $N'$ respectively. Furthermore, since the MMSE multi-user detection algorithm may effectively suppress the inter-user interference, in the downlink transmission process, performing the preprocessing of $\widehat{S}=((H^H H)^t + \sigma^2 I)^{-1} S_{DL}$ on the modulation symbol $S_{DL}$ may achieve an effect similar to that of the uplink MMSE multi-user detection, i.e., the effect of suppressing the inter-user interference in the downlink transmission process may be achieved, so that the performance of the downlink transmission of the cell-free MIMO system is improved.

Exemplarily, FIG. 2 shows a schematic diagram of transmission performance of a system. Assuming that a number of transmitted symbols is 144, a number of antennas is 64, a number of users is 8, and signal-to-noise ratios (SNRs) are 0 dB ((a) in FIG. 2) and 3 dB ((b) in FIG. 2) respectively, a channel of a physical resource block (PRB) is flat fading. Of course, the present disclosure has no requirement on channels of different PRBs, which may also be selective fading. As shown in (a) of FIG. 2, curve 21 is a transmission spectrum efficiency curve under an MRC precoding method, and curve 22 is a transmission spectrum efficiency curve through the above-mentioned preprocessing. Curve 23 is a spectrum efficiency curve of downlink MMSE precoding under ideal channel estimation. Comparing curve 22 with curve 21, it can be seen that the transmission performance is significantly improved through the above-mentioned preprocessing. In addition, assuming that the number of transmitted symbols is 144, the number of antennas is 64, the number of users is 8, and the signal-to-noise ratio (SNR) is 3 dB, as shown in (b) of FIG. 2, curve 24 is a transmission performance curve under the MRC precoding method, and curve 25 is a transmission performance curve through the above-mentioned preprocessing. Curve 26 is a spectrum efficiency curve of downlink MMSE precoding under the ideal channel estimation. Comparing curve 24 with curve 25, it can be seen that the transmission performance is significantly improved through the above-mentioned preprocessing.

The following precoding methods provided by the embodiments of the present disclosure will be described below with reference to the drawings of the specification.

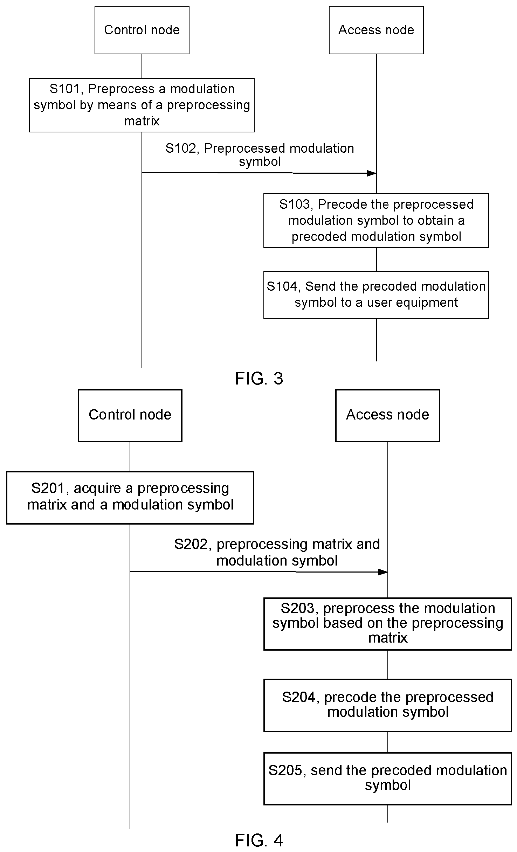

As shown in FIG. 3, the embodiments of the present disclosure provide a precoding method, and the method includes the following content.

In S101, a control node preprocesses a modulation symbol by using a preprocessing matrix, to obtain a preprocessed modulation symbol.

Here, the preprocessing matrix is a matrix used to preprocess the modulation symbol.

In some embodiments, when applied in the Cell-free MIMO system, the above-mentioned control node may be a CPU, and an access node connected to the control node may be an AP.

In some embodiments, the preprocessing matrix is determined according to an autocorrelation matrix (i.e., $H^H H$) and a noise variance value of a channel matrix. Here, the autocorrelation matrix of the channel matrix is equivalent to a conjugate transposed matrix of the channel matrix right-multiplied by the channel matrix.

For example, the preprocessing matrix may be determined by: transposing the autocorrelation matrix of the channel matrix, to obtain a first matrix; multiplying the noise variance value by a unit matrix, to obtain a second matrix, where a size of the unit matrix is the same as a size of the autocorrelation matrix of the channel matrix; summing the first matrix and the second matrix, to obtain a third matrix; and taking an inverse matrix of the third matrix as the preprocessing matrix.

Here, in combination with the above-mentioned formula (10), the above-mentioned first matrix is $(H^H H)^t$, the above-mentioned second matrix is $\sigma^2 I$, and the above-mentioned third matrix is $(H^H H)^t + \sigma^2 I$, and $I$ is the unit matrix. Thus, the preprocessing matrix is $((H^H H)^t + \sigma^2 I)^{-1}$.

In some embodiments, the control node may directly acquire the channel matrix from the access node, and then the control node determines the autocorrelation matrix of the channel matrix according to the channel matrix.

In some other embodiments, the control node may acquire the autocorrelation matrix of the channel matrix from the access node. It should be noted that if the control node directly acquires the signal matrix from the access node, all access nodes need to transmit radio channel information of all users that all the access nodes have, back to the control node. If the number of access nodes is large, the access nodes may need a large front-haul bandwidth to transmit channel matrix information to the control node. Thus, the control node acquires the autocorrelation matrix of the channel matrix from the access node, instead of acquiring the channel matrix, which can effectively reduce the front-haul bandwidth required for acquiring the channel matrix.

Any one of the access nodes may determine an autocorrelation matrix of a channel matrix corresponding to this access node, which is then accumulated with the received autocorrelation matrix data of a channel matrix sent by a previous access node, and then, send the accumulated result to a next access node.

Here, the autocorrelation matrix data of the channel matrix sent by the previous access node is an accumulated result of autocorrelation matrices of channel matrices of all previous access nodes.

Exemplarily, it is assumed that a signal matrix of an m-th access node, i.e., $AP_m$, is $\boldsymbol{h_m}$, where $\boldsymbol{h_m}$ is elements of the m-th row of the uplink transmission channel matrix $\boldsymbol{H}$. The autocorrelation matrix data of the channel matrix received by $AP_m$ and transmitted by a previous access node, i.e., $AP_{m-1}$, is $\sum_{j=1}^{m-1} \boldsymbol{h_j}^H \boldsymbol{h_j}$, and $AP_m$ may determine $\boldsymbol{h_m}^H \boldsymbol{h_m} + \sum_{j=1}^{m-1} \boldsymbol{h_j}^H \boldsymbol{h_j}$, i.e., $\sum_{j=1}^{m} \boldsymbol{h_j}^H \boldsymbol{h_j}$, which is a K×K matrix. Then, $AP_m$ may transmit $\sum_{j=1}^{m} \boldsymbol{h_j}^H \boldsymbol{h_j}$, i.e., the K×K matrix, to a next access node, i.e., $AP_{m+1}$.

Analogically, a result transmitted by the last M-th access node to the control node is $\sum_{j=1}^{M} \boldsymbol{h_j}^H \boldsymbol{h_j}$, i.e., $\boldsymbol{H^H H}$.

It should be noted that in such implementation, only a K×K complex symmetric matrix needs to be transmitted additionally between access nodes, and therefore, in the transmission process, only upper triangular elements or lower triangular elements of the matrix, i.e., (K+1)×K/2 complex numbers, may be transmitted, instead of transmitting all K×K complex numbers, so that the transmission bandwidth is reduced. Here, a number of transmission symbols that need to be transmitted does not increase as the number of access nodes increases.

In yet some other embodiments, the control node receives a maximum ratio combining (MRC) data symbol transmitted back by the access node, and decodes the MRC data symbol, to obtain decoded data. Then, the control node determines the autocorrelation matrix of the channel matrix based on the MRC data symbol and the decoded data. It should be noted that the control node does not need to additionally acquire relevant information of the channel matrix from the access node, which is beneficial to reducing the front-haul bandwidth.

Exemplarily, if the control node has acquired $\boldsymbol{S_{MRC}} = \boldsymbol{H^H Y}$ ($\boldsymbol{S_{MRC}}$ is a K×L matrix, each row of which is an MRC combined symbol stream of a user), then the control node may perform demodulation and decoding and reconstruct a data symbol $\boldsymbol{S}$, based on $\boldsymbol{S_{MRC}}$.

Furthermore, by $\boldsymbol{S_{MRC}}$ and $\boldsymbol{S}$, the following formula (13) may be obtained:

$$\boldsymbol{S_{MRC} S^H} = (\boldsymbol{H^H H S + H^H N})\boldsymbol{S^H} = \boldsymbol{H^H H S S^H + H^H N S^H} \qquad \text{Formula (13).}$$

Furthermore, an approximate value $\boldsymbol{H^H H} = \boldsymbol{S_{MRC} S^H} (\boldsymbol{S S^H})^{-1}$ of $\boldsymbol{H^H H}$ may be obtained.

In this way, since the control node has determined $\boldsymbol{S}$, the control node may obtain the approximate value of $\boldsymbol{H^H H}$ by calculating $\boldsymbol{S_{MRC} S^H} (\boldsymbol{S S^H})^{-1}$. That is, the preprocessing matrix may be expressed as $((\boldsymbol{S_{MRC} S^H} (\boldsymbol{S S^H})^{-1})^t + \sigma^2 \boldsymbol{I})^{-1}$.

In some embodiments, the access node may transmit $\sigma^2$ or information related to $\sigma^2$ back to the control node. Or, the control node may determine $\sigma^2$ according to a parameter of the access node, without the need for the access node to transmit $\sigma^2$ or the information related to $\sigma^2$.

Furthermore, after the preprocessing matrix is determined, the control node may further right-multiply the preprocessing matrix by the modulation symbol, i.e., $\boldsymbol{\hat{S}} = ((\boldsymbol{H^H H})^t + \sigma^2 \boldsymbol{I})^{-1} \boldsymbol{S_{DL}}$, to obtain the preprocessed modulation symbol $\boldsymbol{\hat{S}}$.

In S102, the control node sends the preprocessed modulation symbol to an access node.

Correspondingly, the access node acquires the preprocessed modulation symbol from the control node. Also, there may be a plurality of access nodes, so that the control node sends the preprocessed modulation symbol to each of the access nodes respectively.

In S103, the access node precodes the preprocessed modulation symbol, to obtain a precoded modulation symbol.

Optionally, each access node may perform conjugate precoding on the preprocessed modulation symbol respectively.

Exemplarily, for $AP_m$ among the plurality of access nodes, after the access node receives $\hat{\mathbf{S}}$, $\boldsymbol{g_m}$ may be set to be equal to an m-th row of $(\boldsymbol{H}^t)^H$ based on a downlink channel between the access node and the user equipment, i.e., the m-th row of $(\boldsymbol{H}^t)^H$. $AP_m$ may perform conjugate precoding on the preprocessed modulation symbol $\hat{\mathbf{S}}$, i.e., $\boldsymbol{g}_m((\boldsymbol{H}^H \boldsymbol{H})^t + \sigma^2 \boldsymbol{I})^{-1}\boldsymbol{S_{DL}}$.

In S104, the access node sends the precoded modulation symbol.

Here, each access node sends the precoded modulation symbol to the user equipment respectively.

Exemplarily, taking $AP_m$ among the plurality of access nodes as an example, $AP_m$ may send $\boldsymbol{g}_m((\boldsymbol{H}^H \boldsymbol{H})^t + \sigma^2 \boldsymbol{I})^{-1}\boldsymbol{S_{DL}}$ to K UEs. Furthermore, combining all the access nodes in the system, modulation symbols sent by M access nodes may be obtained as: $(\boldsymbol{H}^t)^H((\boldsymbol{H}^H \boldsymbol{H})^t + \sigma^2 \boldsymbol{I})^{-1}\boldsymbol{S_{DL}}$.

In the embodiments of the present disclosure, the control node may preprocess the modulation symbol based on the preprocessing matrix, and then send the preprocessed modulation symbol to the access node, so that the access node precode the preprocessed modulation symbol, and in this way, the inter-user interference may be suppressed, and the multi-user downlink transmission performance of the system is improved.

In some embodiments, the embodiments of the present disclosure also provide a precoding method, and as shown in FIG. 4, the method includes the following content.

In S201, a control node acquires a preprocessing matrix and a modulation symbol.

Here, the preprocessing matrix is used to preprocess the modulation symbol to obtain a preprocessed modulation symbol. The related introduction of the preprocessing matrix may refer to the above description and will not be repeated here.

In S202, the control node sends the preprocessing matrix and the modulation symbol to an access node.

Correspondingly, the access node acquires the modulation symbol and the preprocessing matrix from the control node. Also, there may be a plurality of access nodes, so that the control node sends the preprocessing matrix and the modulation symbol to each of the access nodes respectively.

It should be noted that although the dimension of the preprocessed modulation symbol is the same as that of the modulation symbol to be preprocessed, which are both K×L matrices, a number of bits obtained by quantizing the preprocessed modulation symbol and a number of bits obtained by quantizing the modulation symbol to be preprocessed are different. Exemplarily, the number of quantized bits of the modulation symbol before being preprocessed only needs log2(Q), where Q is a number of modulation constellation points. For example, for modulation symbols of 64-quadrature amplitude modulation (64QAM), each modulation symbol needs to be quantized with 6 bits. However, the preprocessed modulation symbol is a continuous complex symbol, which needs to be quantized with more bits, and assuming that the quantization needs 24 bits(12 bits for a real part and 12 bits for an imaginary part), an amount of data transmitted by the control node to the access node is four times as large as before, and the transmission bandwidth is larger.

Therefore, in the embodiments of the present disclosure, the control node may send the preprocessing matrix and the modulation symbol to the access node, so that the access node preprocesses the modulation symbol based on the preprocessing matrix. In this way, the control node only needs to transmit one more K×K matrix $((\boldsymbol{H}^H \boldsymbol{H})^t + \sigma^2 \boldsymbol{I})^{-1}$, and since this matrix is a complex symmetric matrix, only the upper triangular elements or the lower triangular elements of the matrix, i.e., (K+1)×K/2 complex numbers, need to be transmitted, instead of transmitting all K×K complex numbers, in the transmission process, so that the transmission bandwidth is reduced.

In S203, the access node preprocesses the modulation symbol based on the preprocessing matrix, to obtain a preprocessed modulation symbol.

Exemplarily, after determining that the preprocessing matrix is acquired, the access node may right-multiply the preprocessing matrix by the modulation symbol, i.e., $\hat{\mathbf{S}}=((\boldsymbol{H}^H \boldsymbol{H})^t + \sigma^2 \boldsymbol{I})^{-1}\boldsymbol{S_{DL}}$, to obtain the preprocessed modulation symbol $\hat{\mathbf{S}}$.

In S204, the access node precodes the preprocessed modulation symbol, to obtain a precoded modulation symbol.

Optionally, each of the access nodes may perform conjugate precoding on the preprocessed modulation symbol respectively.

Exemplarily, for $AP_m$ among the plurality of access nodes, after this access node receives $((\boldsymbol{H}^H\boldsymbol{H})^t + \sigma^2\boldsymbol{I})^{-1}$ and $\boldsymbol{S_{DL}}$, $\boldsymbol{g_m}$ may be set to be equal to the m-th row of $(\boldsymbol{H}^t)^H$, based on downlink channels between the access node and K UEs, i.e., the m-th row of $(\boldsymbol{H}^t)^H$. $AP_n$ may perform conjugate precoding on the preprocessed modulation symbol, i.e. $\boldsymbol{g}_m((\boldsymbol{H}^H\boldsymbol{H})^t + \sigma^2\boldsymbol{I})^{-1}\boldsymbol{S_{DL}}$.

In S205, the access node sends the precoded modulation symbol.

Here, each of the access nodes sends the precoded modulation symbol to K UEs respectively.

Exemplarily, taking $AP_m$ among the plurality of access nodes as an example, $AP_m$ may send $\boldsymbol{g_m}((\boldsymbol{H}^H \boldsymbol{H})^t + \sigma^2\boldsymbol{I})^{-1}\boldsymbol{S_{DL}}$ to K UEs.

Furthermore, combining all the access nodes in the system, modulation symbols sent by M access nodes may be obtained as: $(H^t)^H((H^HH)^t + \sigma^2 I)^{-1}S_{DL}$.

Based on the precoding method shown in FIG. 4, the modulation symbol is preprocessed and precoded in sequence, so that the modulation signal finally sent can suppress the inter-user interference in the downlink transmission process.

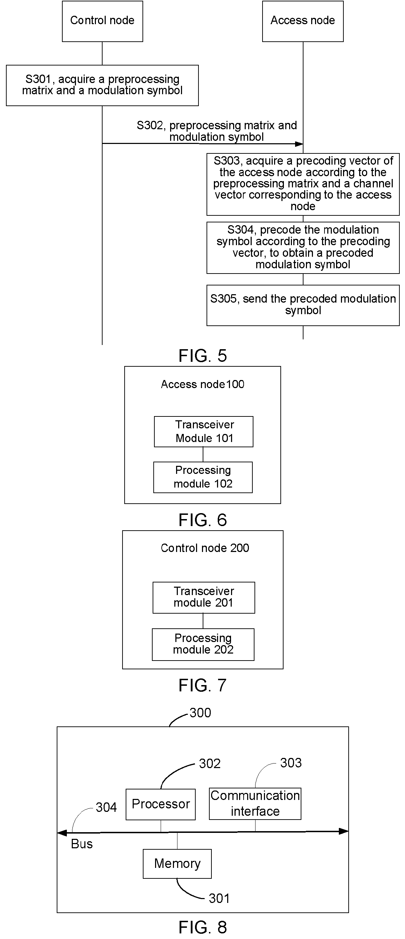

In some embodiments, the embodiments of the present disclosure further provide a precoding method, and as shown in FIG. 5, the method includes the following content.

In S301, a control node acquires a preprocessing matrix and a modulation symbol.

Here, step S301 may refer to the above related description of step S201, and will not be repeated here.

In S302, the control node sends the preprocessing matrix and the modulation symbol to an access node.

Here, step S302 may refer to the above related description of step S202, and will not be repeated here.

In S303, the access node acquires a precoding vector of the access node according to the preprocessing matrix and a channel vector corresponding to the access node.

Here, a channel vector corresponding to an m-th access node may be the m-th row of $(H^t)^H$.

In some embodiments, the precoding vector is equal to the channel vector corresponding to the access node right-multiplied by the preprocessing matrix. For example, let $g_m$ be equal to the m-th row of $(H^t)^H$, which is multiplied by the preprocessing matrix, and then $g_m((H^H H)^t + \sigma^2 I)^{-1}$ is obtained, which is a row vector of a length K.

In S304, the access node precodes the modulation symbol according to the precoding vector, to obtain a precoded modulation symbol.

Optionally, each of the access nodes may perform conjugate precoding on the preprocessed modulation symbol based on the precoding vector respectively.

Exemplarily, the access node may right-multiply the precoding vector obtained in step S303, i.e., the row vector of the length K, by the modulation symbol $S_{DL}$, to obtain $g_m((H^H H)^t + \sigma^2 I)^{-1}S_{DL}$.

In S305, the access node sends the precoded modulation symbol.

Here, step S305 may refer to the above related description of step S205, and will not be repeated here.

Based on the precoding method shown in FIG. 5, the precoding vector is first determined based on the preprocessing matrix and the downlink channel, so that the modulation signal precoded based on the precoding vector can suppress the inter-user interference in the downlink transmission process. Also, first determining the precoding vector, may reduce the amount of computation of the device.

It can be understood that in order to implement the above functions, a communication apparatus includes corresponding hardware structures and/or software modules for performing the various functions. Those skilled in the art should readily recognize that algorithm steps of the examples described in combination with the embodiments of the present disclosure can be implemented via hardware or a combination of hardware and computer software in the present disclosure. Whether a certain function is performed via the hardware or the computer software-driven hardware, depends on the specific application and restrictive conditions on the design of the technical solutions. A skilled person may use different methods for each specific application to implement the described functions, but such implementation should not be considered beyond the scope of the present disclosure.

In the embodiments of the present disclosure, the communication apparatus may be divided into functional modules according to the above-mentioned method embodiments, and for example, each functional module may be divided corresponding to each function, or two or more functions may be integrated into one functional module. The above-mentioned integrated module may be implemented in the form of hardware or may be implemented in the form of software. It should be noted that the division of modules in the embodiments of the present disclosure is illustrative, and is merely a kind of logical functional division, and there may be other division methods in actual implementations. The example in which each functional module may be divided corresponding to each function is taken for explanation below.

FIG. 6 is a structural schematic diagram of an access node provided by the embodiments of the present disclosure, and the access node may perform the precoding methods provided by the above method embodiments. As shown in FIG. 6, the access node 100 includes a transceiver module 101 and a processing module 102.

In some embodiments, the transceiver module 101 is configured to acquire a preprocessed modulation symbol from a control node, where the preprocessed modulation symbol is obtained by preprocessing a modulation symbol by a preprocessing matrix. The processing module 102 is configured to precode the preprocessed modulation symbol, to obtain a precoded modulation symbol. The transceiver module 101 is further configured to send the precoded modulation symbol.

In some other embodiments, the transceiver module 101 is configured to acquire a modulation symbol and a preprocessing matrix from a control node. The processing module 102 is configured to preprocess the modulation symbol based on the preprocessing matrix, to obtain a preprocessed modulation symbol; and precode the preprocessed modulation symbol, to obtain a precoded modulation symbol. The transceiver module 101 is further configured to send the precoded modulation symbol.

In some other embodiments, the transceiver module 101 is configured to acquire a modulation symbol and a preprocessing matrix from a control node. The processing module 102 is configured to determine a precoding vector according to the preprocessing matrix and a channel vector corresponding to the access node; and precode the modulation symbol according to the precoding vector, to obtain a precoded modulation symbol. The transceiver module 101 is further configured to send the precoded modulation symbol.

FIG. 7 is a structural schematic diagram of another control node provided by the embodiments of the present disclosure, and the control node may perform the precoding methods provided by the above method embodiments. As shown in FIG. 7, the control node 200 includes a transceiver module 201 and a processing module 202.

In some embodiments, the processing module 202 is configured to preprocess a modulation symbol by using a preprocessing matrix, to obtain a preprocessed modulation symbol. The transceiver module 201 is configured to send the preprocessed modulation symbol to an access node.

In some embodiments, the transceiver module 201 is configured to acquire a preprocessing matrix and a modulation symbol, where the preprocessing matrix is used to preprocess the modulation symbol to obtain a preprocessed modulation symbol. The processing module 202 is configured to send the preprocessing matrix and the modulation symbol to an access node.

In a case where functions of the above-described integrated modules are implemented in the form of hardware, the embodiments of the present disclosure provide a structural schematic diagram of a communication apparatus. The communication apparatus may be the access node 100 or the control node 200 described above. As shown in FIG. 8, the communication apparatus 300 includes a processor 302 and a bus 304. Optionally, the communication apparatus 300 may further include a memory 301; and optionally, the communication apparatus 300 further includes a communication interface 303.

The processor 302 may implement or perform various exemplary logical blocks, modules and circuits described in conjunction with the embodiments of the present disclosure. The processor 302 may be a central processing unit, a general-purpose processor, a digital signal processor, an application specific integrated circuit, a field programmable gate array or other programmable logic devices, a transistor logic device, a hardware component or any combination thereof. It may implement or perform various exemplary logical blocks, modules and circuits described in conjunction with the embodiments of the present disclosure. The processor 302 may also be a combination that implements computing functions, for example, including a combination of one or more microprocessors, a combination of a digital signal processor (DSP) and a microprocessor, or the like.

The communication interface 303 is configured to connect with other devices via a communication network. The communication network may be an Ethernet, a radio access network, a wireless local area network (WLAN), or the like.

The memory 301 may be, but not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As a possible implementation, the memory 301 may exist independently of the processor 302, and the memory 301 may be connected to the processor 302 via the bus 304 and is used for storing instructions or program codes. The processor 302, when calling and executing the instructions or program codes stored in the memory 301, is capable of implementing the methods provided by the embodiments of the present disclosure.

As another possible implementation, the memory 301 may also be integrated with the processor 302.

The bus 304 may be an extended industry standard architecture (EISA) bus or the like. Buses 304 may be divided into address buses, data buses, control buses, and the like. For the convenience of representation, only one thick line is used in FIG. 8 for representation, but it does not mean that there is only one bus or one type of bus.

Some embodiments of the present disclosure provide a computer readable storage medium (e.g., a non-transitory computer readable storage medium), and the computer readable storage medium has stored computer program instructions therein that, when running on a computer, cause the computer to perform the method as described in any of the above-mentioned embodiments.

Exemplarily, the above-mentioned computer readable storage medium may include, but be not limited to, a magnetic storage device (e.g., a hard disk, a floppy disk or a magnetic tape, etc.), an optical disk (e.g., a Compact Disk (CD) or a Digital Versatile Disk (DVD), etc.), a smart card and a flash memory device (e.g., an Erasable Programmable Read-Only Memory (EPROM), a card, a stick or a key driver, etc.). The various computer readable storage medium described in the present disclosure may represent one or more devices and/or other machine-readable storage media for storing information. The term "machine-readable storage medium" may include, but be not limited to, a radio channel and various other media capable of storing, containing, and/or carrying instructions and/or data.

The embodiments of the present disclosure provide a computer program product including instructions, and the computer program product, when running on a computer, causes the computer to perform the method as described in any of the above-mentioned embodiments.

The foregoing is only the specific embodiments of the present disclosure, but the protection scope of the present disclosure is not limited thereto, and any changes or substitutions within the scope of the technologies disclosed in the present disclosure should be covered within the protection scope of the present disclosure. Therefore, the protection scope of the present disclosure should be determined based on the protection scope of claims.

**Claims**

1. A precoding method, **characterized by** comprising:

   acquiring, by an access node, a preprocessed modulation symbol from a control node, wherein the preprocessed modulation symbol is obtained by preprocessing a modulation symbol by a preprocessing matrix;
   precoding, by the access node, the preprocessed modulation symbol, to obtain a precoded modulation symbol; and
   sending, by the access node, the precoded modulation symbol.

2. The method according to claim 1, wherein the preprocessing matrix is determined according to an autocorrelation matrix and a noise variance value of a channel matrix.

3. The method according to claim 2, wherein the preprocessing matrix is determined by:

   transposing the autocorrelation matrix of the channel matrix, to obtain a first matrix;
   multiplying the noise variance value by a unit matrix, to obtain a second matrix, wherein a size of the unit matrix is the same as a size of the autocorrelation matrix of the channel matrix;
   summing the first matrix and the second matrix, to obtain a third matrix; and
   taking an inverse matrix of the third matrix as the preprocessing matrix.

4. The method according to claim 2 or 3, wherein the preprocessed modulation symbol is equal to the preprocessing matrix right-multiplied by the modulation symbol.

5. The method according to claim 2 or 3, further comprising:
   sending, by the access node, the autocorrelation matrix of the channel matrix to the control node.

6. The method according to claim 2 or 3, wherein the autocorrelation matrix of the channel matrix is determined according to a maximum ratio combining (MRC) data symbol transmitted back by the access node to the control node, and a data symbol obtained after decoding the MRC combined data symbol.

7. A precoding method, **characterized by** comprising:

   preprocessing, by a control node, a modulation symbol by using a preprocessing matrix, to obtain a preprocessed modulation symbol; and
   sending, by the control node, the preprocessed modulation symbol to an access node.

8. The method according to claim 7, wherein the preprocessing matrix is determined according to an autocorrelation matrix and a noise variance value of the channel matrix.

9. The method according to claim 8, wherein the preprocessing matrix is determined by:

   transposing the autocorrelation matrix of the channel matrix, to obtain a first matrix;
   multiplying the noise variance value by a unit matrix, to obtain a second matrix, wherein a size of the unit matrix is the same as a size of the autocorrelation matrix of the channel matrix;
   summing the first matrix and the second matrix, to obtain a third matrix; and
   taking an inverse matrix of the third matrix as the preprocessing matrix.

10. The method according to claim 8 or 9, wherein preprocessing, by the control node, the modulation symbol by using the preprocessing matrix, to obtain the preprocessed modulation symbol, comprises:
    right-multiplying, by the control node, the preprocessing matrix by the modulation symbol, to obtain the preprocessed modulation symbol.

**11.** The method according to claim 8 or 9, further comprising:
acquiring, by the control node, the autocorrelation matrix of the channel matrix from the access node.

**12.** The method according to claim 8 or 9, further comprising:

receiving, by the control node, a maximum ratio combining (MRC) data symbol transmitted back by the access node;
decoding, by the control node, the MRC data symbol, to obtain a decoded data symbol; and
determining, by the control node, the autocorrelation matrix of the channel matrix based on the MRC data symbol and the decoded data symbol.

**13.** A precoding method, **characterized by** comprising:

acquiring, by an access node, a modulation symbol and a preprocessing matrix from a control node;
preprocessing, by the access node, the modulation symbol based on the preprocessing matrix, to obtain a preprocessed modulation symbol;
precoding, by the access node, the preprocessed modulation symbol, to obtain a precoded modulation symbol; and
sending, by the access node, the precoded modulation symbol.

**14.** The method according to claim 13, wherein the preprocessing matrix is determined according to an autocorrelation matrix and a noise variance value of a channel matrix.

**15.** The method according to claim 14, wherein the preprocessing matrix is determined by:

transposing the autocorrelation matrix of the channel matrix, to obtain a first matrix;
multiplying the noise variance value by a unit matrix, to obtain a second matrix, wherein a size of the unit matrix is the same as a size of the autocorrelation matrix of the channel matrix;
summing the first matrix and the second matrix, to obtain a third matrix; and
taking an inverse matrix of the third matrix as the preprocessing matrix.

**16.** The method according to claim 13 or 14, wherein preprocessing, by the access node, the modulation symbol based on the preprocessing matrix, to obtain the preprocessed modulation symbol, comprises:
right-multiplying, by the access node, the preprocessing matrix by the modulation symbol, to obtain the preprocessed modulation symbol.

**17.** The method according to claim 13 or 14, further comprising:
sending, by the access node, the autocorrelation matrix of the channel matrix to the control node.

**18.** The method according to claim 13 or 14, wherein the autocorrelation matrix of the channel matrix is determined according to a maximum ratio combining (MRC) data symbol transmitted back by the access node to the control node, and a data symbol obtained after decoding the MRC combined data symbol.

**19.** A precoding method, **characterized by** comprising:

acquiring, by a control node, a preprocessing matrix and a modulation symbol; and
sending, by the control node, the preprocessing matrix and the modulation symbol to an access node.

**20.** The method according to claim 19, wherein the preprocessing matrix is determined according to an autocorrelation matrix and a noise variance value of a channel matrix.

**21.** The method according to claim 20, wherein the preprocessing matrix is determined by:

transposing the autocorrelation matrix of the channel matrix, to obtain a first matrix;
multiplying the noise variance value by a unit matrix, to obtain a second matrix, wherein a size of the unit matrix is the same as a size of the autocorrelation matrix of the channel matrix;
summing the first matrix and the second matrix, to obtain a third matrix; and
taking an inverse matrix of the third matrix as the preprocessing matrix.

22. The method according to claim 20 or 21, wherein the preprocessing matrix is used to preprocess the modulation symbol to obtain a preprocessed modulation symbol, and the preprocessed modulation symbol is equal to the preprocessing matrix right-multiplied by the modulation symbol.

23. The method according to claim 20 or 21, wherein acquiring, by the control node, the preprocessing matrix, comprises: acquiring, by the control node, the autocorrelation matrix of the channel matrix from the access node.

24. The method according to claim 20 or 21, wherein acquiring, by the control node, the preprocessing matrix, comprises:

   receiving, by the control node, a maximum ratio combining (MRC) data symbol transmitted back by the access node;
   decoding, by the control node, the MRC data symbol, to obtain a decoded data symbol; and
   determining, by the control node, the autocorrelation matrix of the channel matrix based on the MRC data symbol and the decoded data symbol.

25. A precoding method, **characterized by** comprising:

   acquiring, by an access node, a modulation symbol and a preprocessing matrix from a control node;
   acquiring, by the access node, a precoding vector according to the preprocessing matrix and a channel vector corresponding to the access node;
   precoding, by the access node, the modulation symbol according to the precoding vector, to obtain a precoded modulation symbol; and
   sending, by the access node, the precoded modulation symbol.

26. The method according to claim 25, wherein the precoding vector is equal to the channel vector corresponding to the access node right-multiplied by the preprocessing matrix.

27. A communication apparatus, **characterized by** comprising: a processor and a memory for storing instructions executable by the processor;
   wherein the processor is configured to execute the instructions to cause the communication apparatus to perform the precoding method according to any one of claims 1 to 26.

28. A computer-readable storage medium, **characterized in that** the computer-readable storage medium has stored computer instructions, and the computer instructions, when executed on an electronic device, cause the electronic device to perform the precoding method according to any one of claims 1 to 26.

FIG. 1

FIG. 2

Control node

Access node

S101, Preprocess a modulation symbol by means of a preprocessing matrix

S102, Preprocessed modulation symbol

S103, Precode the preprocessed modulation symbol to obtain a precoded modulation symbol

S104, Send the precoded modulation symbol to a user equipment

FIG. 3

Control node

Access node

S201, acquire a preprocessing matrix and a modulation symbol

S202, preprocessing matrix and modulation symbol

S203, preprocess the modulation symbol based on the preprocessing matrix

S204, precode the preprocessed modulation symbol

S205, send the precoded modulation symbol

FIG. 4

| Control node | Access node |

S301, acquire a preprocessing matrix and a modulation symbol

S302, preprocessing matrix and modulation symbol

S303, acquire a precoding vector of the access node according to the preprocessing matrix and a channel vector corresponding to the access node

S304, precode the modulation symbol according to the precoding vector, to obtain a precoded modulation symbol

S305, send the precoded modulation symbol

FIG. 5

Access node 100

Transceiver Module 101

Processing module 102

FIG. 6

Control node 200

Transceiver module 201

Processing module 202

FIG. 7

300

302    303

304    Processor    Communication interface

Bus

Memory

301

FIG. 8

## INTERNATIONAL SEARCH REPORT

| International application No. |
| --- |
| **PCT/CN2023/130797** |

| A. | CLASSIFICATION OF SUBJECT MATTER |
| --- | --- |

H04B 7/0456(2017.01)i

According to International Patent Classification (IPC) or to both national classification and IPC

| B. | FIELDS SEARCHED |
| --- | --- |

Minimum documentation searched (classification system followed by classification symbols)

IPC: H04B, H04W, H04L, G06N

Documentation searched other than minimum documentation to the extent that such documents are included in the fields searched

Electronic data base consulted during the international search (name of data base and, where practicable, search terms used)

CNTXT, ENTXT, CNKI, DWPI, IEEE: 预编码, 预处理, 接入节点, 接入点, 控制节点, 中央处理器, 无小区, 干扰, 多输入多输出, 多输出, 多入多出, precoding, preprocess, access point, AP, control point, CPU, cell-free, interference, MIMO, multiple input multiple output

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 113365334 A (SUN YAT-SEN UNIVERSITY) 07 September 2021 (2021-09-07) description, paragraphs 47-192 | 1, 7, 13, 16, 19, 27, 28 |
| A | CN 113365334 A (SUN YAT-SEN UNIVERSITY) 07 September 2021 (2021-09-07) description, paragraphs 47-192 | 2-6, 8-12, 14-18, 20-28 |
| A | CN 112217550 A (HUAWEI TECHNOLOGIES CO., LTD.) 12 January 2021 (2021-01-12) entire document | 1-28 |
| A | WO 2022039295 A1 (LG ELECTRONICS INC.) 24 February 2022 (2022-02-24) entire document | 1-28 |
| A | NGUYEN, Long D. et al. "Energy Efficiency in Cell-Free Massive MIMO With Zero-Forcing Precoding Design" *IEEE Communications Letters*, Vol. 21, No. 8, 31 August 2017 (2017-08-31), entire document | 1-28 |

☑ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 January 2024** | **10 January 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/130797**

### C. DOCUMENTS CONSIDERED TO BE RELEVANT

| Category* | Citation of document, with indication, where appropriate, of the relevant passages | Relevant to claim No. |
|---|---|---|
| A | NAYEBI, Elina et al. "Precoding and Power Optimization in Cell-Free Massive MIMO Systems" *IEEE Transactions on Wireless Communications,* Vol. 16, No. 7, 31 July 2017 (2017-07-31), entire document | 1-28 |

Form PCT/ISA/210 (second sheet) (July 2022)

**INTERNATIONAL SEARCH REPORT**
Information on patent family members

International application No.

**PCT/CN2023/130797**

| Patent document cited in search report | | | Publication date (day/month/year) | Patent family member(s) | | | Publication date (day/month/year) |
|---|---|---|---|---|---|---|---|
| CN | 113365334 | A | 07 September 2021 | None | | | |
| CN | 112217550 | A | 12 January 2021 | WO | 2021008477 | A1 | 21 January 2021 |
| | | | | US | 2022131579 | A1 | 28 April 2022 |
| | | | | EP | 3993281 | A1 | 04 May 2022 |
| | | | | IN | 202227001878 | A | 20 May 2022 |
| WO | 2022039295 | A1 | 24 February 2022 | US | 2023318691 | A1 | 05 October 2023 |
| | | | | KR | 20230051203 | A | 17 April 2023 |

Form PCT/ISA/210 (patent family annex) (July 2022)

**REFERENCES CITED IN THE DESCRIPTION**

**Patent documents cited in the description**

- CN 202211491458